# NOUVEAU FASCICULE DE BREVET EUROPEEN

(11) **EP 0 201 426 B2**
(45) Date de publication et mention de la décision concernant l'opposition: **31.07.1996**
(45) Mention de la délivrance du brevet: 25.07.1990
(21) Numéro de dépôt: 86400972.5
(22) Date de dépôt: 06.05.1986
(51) Int. Cl.: A01G 31/02

(54) **Substrat pour culture hors-sol**
Substrat für erdlose Kultur
Substrate for soilless culture

(30) Priorité: 07.05.1985 FR 8506916
(43) Date de publication de la demande: 17.12.1986
(73) Titulaire: ISOVER SAINT-GOBAIN, F-92400 Courbevoie (FR)
(72) Inventeur: Meunier, Jean-Paul, F-60600 Clermont (FR)
(74) Mandataire: Le Vaguerese, Sylvain Jacques

(56) Documents cités:
- EP-A- 0 038 234
- DE-A- 3 121 277
- GB-A- 1 336 426
- GB-A- 1 562 182
- GB-A- 2 036 523
- US-A- 2 192 939
- Journal "Taspo" no. 9
- Prospectus "Isolation Thermique du bâtiment d'habitation, no. 10, Avril 1965
- Prospectus "Isolatie Isoverbel de producten"
- EURIMA - news-letter no. 21,1978

## Description

La pratique de la culture hors-sol en constant développement a conduit à l'utilisation de substrats de natures variées notamment des produits fibreux d'origine végétale, des produits minéraux naturels tels que les graviers et pouzzolanes ou encore des produits minéraux traités tels que les perlites expensées ou les laines de roche.

Le choix du sustrat est fonction à la fois de ses qualités pour faciliter la culture, bonne rétention des solutions, bonne aération, stabilité géométrique et chimique, et... et de données économiques : coût du substrat, fréquence de renouvellement mais aussi investissement nécessaire en fonction du mode de culture considéré qui comme nous le verrons peut être lié au type de substrat utilisé.

Parmi les matériaux minéraux traités, les laines de roche présentent des propriétés avantageuses. Elles offrent une très forte porosité de l'ordre de 95 %, une bonne rétention d'eau et une bonne aération. La manipulation du matériau est également facile en raison de sa légèreté. En contrepartie, le coût de ces substrats conduit ordinairement pour des raisons évidentes d'économie à des utilisations multiples. Ces utilisations imposent une désinfection, donc des manipulations, qui sont rendues d'autant moins faciles que le matériau, à la suite des cultures successives, voit sa structure se dégrader. Parallèlement, la dégradation de la structure entraine une perte de porosité et un tassement qui modifient les conditions de culture.

Parmi les caractéristiques avantageuses des substrats de laine de roche, la quantité d'eau «disponible» qui est retenue présente un intérêt particulier.

Cette caractéristique détermine la marge de sécurité dont on dispose pour maintenir des conditions d'humidité satisfaisantes. Plus cette eau disponible est importante pour un même volume de matériau, plus la sécurité est grande. Si le matériau présente une forte quantité d'eau disponible, l'alimentation en liquide du substrat lors de la culture peut être réalisée à intervalles plus espacés. Mieux encore, le volume de substrat nécessaire à la culture peut être réduit lorsque la quantité d'eau disponible par unité de volume s'accroît.

Cette dernière particularité est d'un grand intérêt pratique. Un volume réduit de substrat, et de façon plus précise une quantité de produits fibreux moindre, conduit à un matériau moins coûteux. Lorsque cette diminution de coût est suffisante, elle peut s'accompagner d'autres avantages en particulier, en dessous d'un certain seuil, l'utilisation unique du substrat peut être envisagée ce qui permet de supprimer les opérations occasionnées par la stérilisation du substrat entre cultures successives.

L'invention se propose de fournir de nouveaux substrats fibreux minéraux pour la culture hors-sol. Ces matériaux minéraux selon l'invention présentent des caractéristiques telles que l'eau disponible soit sensiblement accrue.

Il est connu du brevet GB-A-1 336 426 des substrats constitués de matériaux fibreux présentant une masse volumique allant jusqu'à 200 kg/m³ et de préférence inférieure à 100 kg/m³, notamment de 80 kg/m³, et dont la majorité des fibres à un diamètre dans l'intervalle de 5 à 10 micromètres.

Les inventeurs ont mis en évidence les rapports existant entre la disponibilité en eau des substrates fibreux et les caractéristiques de structure de ses substrats. En particulier, les inventeurs ont pu établir les conditions de masse volumique et de finesse de fibres les plus satisfaisantes pour obtenir une bonne réserve d'eau disponible.

Les substrats selon l'invention présentent une masse volumique au moins supérieure à 15 et au plus égale à 40 kg/m³ avec des fibres dont le diamètre moyen se situe entre 2 et 8 micromètres et de préférence à moins de 6 micromètres.

A titre indicatif pour les laines de roche utilisées traditionnellement comme substrat, la masse volumique est ordinairement plus élevée et se situe à 70-80k/m³ ou plus. Les substrats selon l'invention sont donc très sensiblement plus légers que les substrats traditionnels.

Cette légèreté ne modifie pas de façon profonde la porosité. Même les substrats traditionnels offrent en effet une porosité élevée, de l'ordre de 95 %. Autrement dit, dans le substrat les fibres n'occupent que 5 % du volume, le reste correspondant à l'espace que l'eau peut occuper. Une diminution de la masse volumique n'accroit donc pas de façon substantielle l'espace disponible pour la solution. Mais la diminution de la masse volumique avec une diminution du diamètre moyen des fibres (et la multiplication de ces fibres) favorise, semble-t-il, le développement des actions capillaires ce qui peut expliquer l'amélioration de la disponibilité en eau du substrat.

Il faut souligner qu'une réduction de la masse volumique ne se traduit pas toujours nécessairement par une diminution du diamètre des fibres utiles, c'est-à-dire de celles qui participent à la formation du réseau capillaire auquel on doit la rétention d'eau. En particulier pour les laines de roche, le mode de production entraine la présence d'une proportion relativement importante de particules dites «infibrées». Sous ce nom on désigne les particules qui présentent un diamètre très supérieur à celui des fibres proprement dites, et que l'on fixe arbitrairement par exemple à plus de 40 micromètres. La proportion d'infibrés atteint souvent ou même dépasse 30 % de la masse totale du substrat. Comme nous l'avons précisé ci-dessus, ces particules de forte dimension participent de façon très réduite, en considération de leur masse, à la formation du réseau capillaire et par suite aux propriétés de rétention des solutions. Il est donc souhaitable autant que possible d'utiliser des produits dépourvus, ou à faible teneur, en infibrés.

En pratique, il est possible au cours de la fabrication de modifier la masse volumique des feutres de fibres en les comprimant plus ou moins au moment du traitement thermique qui ordinairement fixe leur configuration. On obtient ainsi des substrats dont les fibres ont les mêmes dimensions et qui ne diffèrent que par leur masse volumique (et de façon moins significative par leur porosité globale).

Pour les substrats formés à partir des fibres les plus grosses, à savoir celles dont le diamètre moyen est supérieur à 6 micromètres, on constate que l'eau disponible est d'autant plus importante que la masse volumique est grande. Ceci explique pourquoi, dans le cas des laines de roches, dont les fibres dans les techniques les plus courantes et notamment celles utilisées pour la production des substrats ont un diamètre de l'ordre de 6 micromètres, la tendance est de mettre en oeuvre des produits lourds.

Avec les fibres plus fines, par exemple de 4, 5, à 3 micromètres ou moins, considérées également selon l'invention, l'influence de la masse volumique est beaucoup moins sensible. Il a donc tout avantage en dehors de ce qui sera vu ci-après à propos de la déformation du substrat sous la charge de la solution, d'utiliser des feutres très légers avec des fibres fines.

Cette différence de comportement s'explique là encore vraisemblablement par la constitution d'un réseau capillaire beaucoup plus important avec les fibres fines.

S'il parait avantageux de réduire le diamètre des fibres constituant le substrat, il est souvent difficile de descendre en dessous d'une certaine limite pour différentes raisons. Une première raison est que la production de fibres très fines, par exemple inférieures à 1 micromètre, requiert des techniques dont le coût est inacceptable pour la production de substrat de culture.

Une autre raison est, par exemple, que les feutres formés à partir de fibres très fines (et à très faible masse volumique) présentent une faible résistance aux efforts mécaniques. En particulier ils peuvent s'affaisser sous la charge de la solution absorbée.

Pour ces raisons, il est avantageux selon l'invention d'utiliser des substrats dont les fibres sont comprises entre 2 et 8 micromètres et de préférence entre 2 et 6 micromètres.

L'affaissement partiel du matériau imbibé dont il a été question ci-dessus ne constitue pas nécessairement un obstacle à l'utilisation. Pour les matériaux les plus légers, un certain tassement lors de l'humidification peut être envisagé. Il suffit dans ce cas d'ajuster l'épaisseur à sec du substrat pour faire en sorte qu'à l'état humide le volume offert à la solution reste suffisant. De ce fait des produits très légers, dont la masse volumique peut être aussi faible que 15 kg/m³ peuvent être utilisés de façon satisfaisante comme substrats selon l'invention.

De tels produits même réduits par exemple à la moitié de leur volume initial sous la masse de solution dont ils sont imbibés, correspondent encore à des masses volumiques très faibles vis-à-vis de celle des substrats traditionnels.

Les déformations subies par ces matériaux ne modifient pas leur cohésion et sont réversibles. Dès que la pression occasionnée par le présence de la solution s'atténue, le substrat reprend son volume.

En dehors des avantages de coût de production et de qualité en ce qui concerne la rétention d'eau, les substrats légers permettent un conditionnement et un stockage améliorés. Il apparait en effet que les substrats traditionnels, en raison même de leur masse volumique, sont des produits relativement rigides. Ils sont notamment incompressibles et ne peuvent être pliés ou enroulés sur eux-mêmes. Au contraire, les feutres de fibres légers sont connus pour présenter une bonne capacité de compression et qui plus est de reprise d'épaisseur lorsque la compression cesse. En d'autres termes, les substrats légers selon l'invention peuvent être comprimés, enroulés sous un volume restreint, pour faciliter leur transport et leur stockage. Cette capacité est d'autant meilleure que la masse volumique est plus faible.

Nous avons indiqué précédemment toute l'importance de l'eau disponible retenue par le substrat pour la conduite des cultures. On peut remarquer que si la capacité d'aération des racines est aussi un facteur important, dans la pratique cette aération n'impose pas qu'une fraction substantielle du volume du substrat soit occupée par de l'air. L'aération se produit en effet également par le biais de l'oxygène dissous dans la solution nutritive, et cette aération est d'autant mieux assurée que la solution au contact des racines est fréquemment renouvelée. Pour cette raison, bien que le substrat joue un rôle dans l'aération, c'est l'aspect irrigation qui est privilégié.

Plus que la quantité d'eau retenue par le substrat, c'est l'eau disponible qui est importante. En effet l'eau imprégnant le substrat est plus ou moins retenue par celui-ci. Si l'eau est trop fortement liée au substrat, elle ne peut plus être utilisée par la plante. Inversement, il est nécessaire que le substrat exerce une certain rétention faute de quoi la solution d'irrigation serait immédiatement drainée.

Pour caractériser la rétention par le substrat, on détermine la teneur en eau d'échantillons en le soumettant à des forces de succion. On définit ainsi pour une dépression exprimée en fonction du logarithme de la hauteur de colonne d'eau (en cm), nommé aussi pF, le pourcentage de volume de substrat occupé par la phase aqueuse. Deux valeurs de pF sont particulièrement significatives pour qualifier le substrat: un pF faible correspondant pratiquement aux conditions du maximum de rétention et que l'on choisit arbitrairement égal à 1 (soit 10 cm de colonne d'eau) et un pF égal à 2 qui correspond pratiquement à la succion la plus élevée qui peut être exercée par exemple par les plantes maraichères, et par suite constitue la limite inférieure d'humidité au-dessus de laquelle le substrat doit être maintenu de façon permanente.

Le substrat est d'autant meilleur que la proportion d'eau extraite entre ces deux valeurs de pF, eau disponible, est plus grande.

Divers modes de détermination de la rétention d'eau ont été proposés qui peuvent conduire à des résultats légèrement différents. La méthode adoptée par les inventeurs est détaillée à propos des exemples de mise en oeuvre.

On constate expérimentalement pour tous les substrats de fibres minérales que la rétention est élevée à pF1 et très faible à pF2 par comparaison avec les autres types de substrats naturels ou artificiels. Des différences peuvent cependant apparaitre entre ces substrats fibreux minéraux notamment pour les valeurs à pF1.

Les substrats selon l'invention présentent une forte rétention à pF1 et, par suite, une réserve disponible importante. Cette réserve disponible n'est pas inférieure à 40 % et le plus fréquemment est supérieure à 50 %.

Pour les substrats composés de fibres extrêmement fines et dont la masse volumique est très faible, la capacité de rétention est déterminée à partir du substrat mouillé pour tenir compte de la propension du substrat à se déformer sous la charge du liquide qui l'imprègne.

En raison notamment de cette forte quantité d'eau disponible, les substrats selon l'invention constitués de fibres très fines peuvent être utilisés dans des conditions d'épaisseur plus faibles que celles mises en oeuvre traditionnellement pour les substrats à base de laine de roche.

Dans la pratique, les substrats de laine de roche proposés pour la culture hors-sol ont une épaisseur relativement importante qui dépasse ordinairement 70 mm. Il semblait préférable en effet, pour les raisons notamment de durabilité et de coût, mais aussi sans doute pour des raisons liées au mode de conduite de la culture, d'utiliser des substrats relativement volumineux.

Les recherches faites par les inventeurs ont montré que des cultures hors-sol pouvaient avantageusement être effectuées sur des substrats de laine minérale sensiblement moins épais. Ces substrats sont moins coûteaux à l'origine ce qui permet d'améliorer les conditions de mise en oeuvre notamment par l'usage pour un nombre de cultures plus restreint et de préférence pour une culture unique. Par ailleurs chaque culture peut être conduite dans de meilleures conditions de régularité.

Les substrats pour culture hors-sol selon l'invention sont avantageusement constitués par des feutres de laine minérale dont l'épaisseur n'est pas supérieure à 40 mm et, de préférence, pas supérieure à 30 mm. Il est apparu lors des essais effectués que de telles épaisseurs, très inférieures à celles utilisées précédemment, sont parfaitement compatibles avec des bons rendements de culture et sans que la croissance soit ralentie. Il apparait en effet que le volume de substrat offert aux plants, sans que la densité superficielle de ces derniers soit modifiée, est suffisant pour un développement satisfaisant des racines. Ce volume est également suffisant pour maintenir une bonne alimentation des plants en solution nutritive.

Cette faible épaisseur des substrats par rapport aux substrats antérieurs de même nature permet en outre un meilleur contrôle de la solution nutritive dont ils sont imbibés. En effet, la consommation de solution est pratiquement identique que l'on opère sur substrat épais ou mince. La quantité de solution retenue est moindre sur le substrat mince et l'apport de solution nouvelle relativement à la masse de liquide étant plus important, la composition de la solution retenue est en permanence plus proche de celle de la solution initiale.

Si du point de vue économique il apparait avantageux d'opérer avec des substrats minces, en pratique il faut que ceux-ci offrent néanmoins un certain volume pour la rétention de la solution et le développement des racines. Il existe des techniques dans lesquelles la culture est conduite sans substrat. Dans ces techniques, les racines croissent à même le conteneur dans lequel circule en permanence la solution nutritive. Ce mode de culture implique une installation très particulière est des investissements importants. Pour ces raisons, de nombreux utilisateurs préfèrent les modes de cultures dans lesquels le substrat est conservé.

Pour maintenir une quantité de solution suffisante et offrir aux racines le volume nécessaire à leur croissance, toujours sans modifier la densité superficielle des plants, l'épaisseur du substrat selon l'invention n'est pas inférieure à 10 mm.

Pour les cultures les plus courantes, le substrat de laine minérale selon l'invention présente une épaisseur de l'ordre de 15 à 35 mm. L'épaisseur choisie, en dehors de la capacité de rétention d'eau du substrat, dépend des plants mais aussi de leur densité, de la fréquence de l'irrigation mise en oeuvre. Eventuellement, cette épaisseur peut aussi dépendre de l'utilisation pour plus d'une culture, mais dans ce cas la mise en oeuvre de ces substrats ne conduit pas à tous les avantages énumérés précédemment. Il est nécessaire notamment d'envisager une stérilisation entre les cultures successives.

Les fibres entrant dans la constitution de ces feutres peuvent être produites à partir de divers matériaux et par diverses techniques.

Jusqu'à présent, seules les laines minérales dites "de roche" ont été utilisées pour servir de substrats de culture hors-sol. Ces laines de roche sont en effet produites à partir de matériaux peu coûteux : roches basaltiques, laitiers de hauts fourneaux et analogues.

Ces matériaux sont traditionnellement traités suivant des techniques conduisant à des feutres renfermant une proportion élevée de particules infibrées. Dans l'utilisation en tant que substrats de culture la présence de ces infibrés est indifférente mais, comme nous l'avons vu, alourdit le produit sans en améliorer les propriétés. L'important pour ce mode de production est qu'il est relativement économique, ce qui joint au faible coût des matières premières permet d'obtenir des substrats dont les prix sont comparables aux substrats de nature différente.

Ces substrats présentent également dans l'ensemble une bonne inertie chimique.

L'invention prévoit également l'utilisation de feutres de laine de verre. Ces feutres, contrairement aux précédents, présentent ordinairement une grande homogénéité due à leur mode de préparation. Il s'agit essentiellement de fibres formées par passage du matériau fondu dans une filière centrifuge. L'absence d'infibrés conduit ordinairement à des feutres qui, pour des caractéristiques de résistance mécanique analogues, sont beaucoup plus légers. Autrement dit, leur masse volumique est ordinairement plus faible. Ceci permet de compenser au moins en partie le fait que leur production est généralement un peu plus coûteuse que celle des laines de roche.

Les techniques de production de fibres de verre présentent en plus l'avantage de pouvoir conduire à des fibres à la fois très fines et très homogènes, finesse et homogénéité qui ne peuvent être obtenues pour les laines de roche.

Il est ainsi possible de produire des substrats de laine de verre dont les fibres comme indiqué précédemment ont un diamètre moyen inférieur à 3 micromètres et peut être même égal ou inférieur à 1 micromètre.

Dans le cas des substrats minces selon l'invention, les qualités structurelles doivent être encore mieux assurées, et les feutres de laine de verre présentent, en règle générale, des propriétés avantageuses de ce point de vue, tant en raison de la finesse des fibres que de leur homogénéité.

Par ailleurs, la réduction du volume du substrat envisagée selon l'invention tend à limiter la part relative du coût des fibres dans le coût final du produit de telle sorte que les différences sur ce point entre les laines de roche et laines de verre s'amenuisent.

Antérieurement à l'invention, la possibilité d'utiliser la laine de verre comme substrat de culture avait soulevé des objections notamment en raison de son manque supposé d'inertie chimique. On craignait en effet que les fibres de verre au contact de la solution nutritive ne dégagent une forte quantité d'ions sodium. Les essais de culture réalisés avec les matériaux en laine de verre selon l'invention ont montré que ces substrats conduisent à des résultats tout à fait comparables à ceux obtenus pour les cultures sur laine de roche. En fait, on constate en général une teneur légèrement supérieure en ions sodium à la première irrigation. Mais cette teneur qui est acceptable décroit ensuite très vite pour s'établir à des valeurs analogues à celles obtenues pour les laines de roche. Ces résultats sont d'autant plus intéressants qu'en raison de l'utilisation des fibres très fines, les échanges avec la solution sont plus importants. Pour l'utilisation envisagée, l'inerte des fibres de verre usuelles peut donc être considérée, comme tout à fait satisfaisante.

Bien évidemment, les compositions verrières choisies ne contiennent pas d'éléments toxiques pour les plantes.

Inversement, il est possible d'envisager l'utilisation de fibres qui ne soient pas systématiquement inertes. Les fibres peuvent servir par exemple comme source d'oligo-éléments qui diffusent lentement au contact de la solution nutritive ou encore renfermer des composés phytosanitaires.

Le plus souvent cependant, il est préférable de faire en sorte que le substrat fibreux soit parfaitement inerte et de réserver à la solution nutritive le rôle d'apporter les éléments nécessaires à la culture.

Les feutres de fibres minérales sont ordinairement liés au moyen de liants organiques telles que les résines phénoplastes. Ces résines sont sans influence sensible sur la culture aux taux où elles sont habituellement utilisées, à savoir de l'ordre de 2-3 % en poids de substrat.

La proportion de liant peut varier en fonction de la nature des fibres, ainsi pour les fibres très fines et les feutres à faible masse volumique, la proportion pondérale de liant peut être un peu plus élevée sans ordinairement dépasser 10 %.

Il faut remarquer que si les substrats fibreux minéraux sont ordinairement dérivés de produits utilisés pour l'isolation, la composition des liants peut être sensiblement différente. Il est fréquent en effet d'introduire avec la résine des composés destinés à modifier les propriétés des feutres. En particulier la composition de liants peut renfermer des substances permettant d'améliorer la résistance des feutres d'isolation contre l'humidité. Il s'agit par exemple de produits à base de silicone. Pour préparer les substrats selon l'invention on utilise des liants dépourvus de ces produits hydrophobes.

Par ailleurs, même en utilisant des liants non hydrophobes, on constate que les substrats traditionnels de laine de roche sont très difficilement mouillés si l'on ne les imprègne pas avec une certaine quantité d'un agent tensio-actif approprié.

L'introduction de l'agent tensio-actif peut être réalisée par exemple de la façon décrite dans la demande de brevet français publiée sous le n° 2 589 917.

L'agent tensio-actif est choisi de telle sorte qu'il ne soit pas nuisible à la culture. Il peut s'agir notamment d'agents non-ioniques tel que le produit commercialisé sous le nom de "Dobanol 91-6".

L'utilisation de fibres très fines selon l'invention, en modifiant la capillarité du substrat, peut rendre inutile l'utilisation d'agent tensio-actif. C'est ce que l'on constate en particulier avec les substrats de laine de verre dont les fibres ont un diamètre moyen égal ou inférieur à 4,5 micromètres, mais le caractére hydrophile des fibres évolue de façon progressive. Il est possible, pour chaque degré d'hydrophilie, d'associer une dimension maximum des fibres qui permette d'atteindre ce degré.

Les substrats selon l'invention se distinguent aussi, le cas échéant, par la façon dont ils sont mis en oeuvre. En effet si la conduite générale de la culture est conservée, lorsque le volume de substrat utilisé est réduit, autrement dit lorsque le substrat est peu épais, les conditions d'irrigation pour satisfaire en permanence les besoins en solution nutritive sont différentes.

De façon générale, le substrat est utilisé avec une irrigation en solution soit perdue, soit recyclée. Dans le premier cas, le substrat est alimenté soit par percolation soit par subirrigation de façon à le maintenir dans des limites acceptables de teneur en solution. Les apports essentiellement discontinus ont pour but de compenser les pertes en solution par absorption par les plants et évaporation. Dans le second cas, le substrat est alimenté de façon permanente et l'éxcédent de solution non retenu est recyclé après avoir été complété et la teneur de ses différents constituants réajustée.

La "réserve" de solution offerte par les substrats minces étant plus faible, lorsque l'irrigation est discontinue cette dernière doit être renouvelée plus fréquemment mais avec des quantités de solution plus faibles. Cette fréquence plus élevée, comme nous l'avons indiqué précédemment, permet un meilleur ajustement de la composition de la solution nutritive au voisinage des racines.

La modification de la fréquence des irrigations ne constitue pas une difficulté dans la mesure où cette opération est ordinairement conduite de façon entièrement automatique selon un programme préétabli et dont l'exécution est assurée par un ensemble d'appareils de mesure, de dosage et de distribution sans intervention d'un opérateur.

L'invention est décrite de façon détaillée dans la suite en faisant référence aux dessins dans lesquels:
- la figure 1 représente, en coupe, de façon schématique une disposition de culture utilisant des substrats selon l'invention,
- la figure 2 représente, à une échelle plus grande, un autre mode de réalisation de substrats selon l'invention,
- la figure 3 représente le dispositif utilisé pour les mesures de rétention d'eau,
- la figure 4 est une représentation graphique de la répartition des phases eau-air dans un substrat selon l'invention, en fonction de la succion exercée.

Les plants utilisés pour la culture peuvent être préparés sur du terreau ou sur un substrat inerte qui ou non de même nature que celui utilisé pour la culture. Ils sont finalement séparés les uns des autres avec une motte 1 qui est destinée à être placée sur le substrat de culture 2.

Pour la culture le substrat est disposé sur un conteneur imperméable 3 qui évite un déperdition de la solution nutritive. Le conteneur est constitué ordinairement par une feuille polymère inerte plus ou moins rigide et qui est maintenue en forme d'auge ou de bac par des piquets régulièrement disposés. Ces derniers ne sont pas représentés sur la figure.

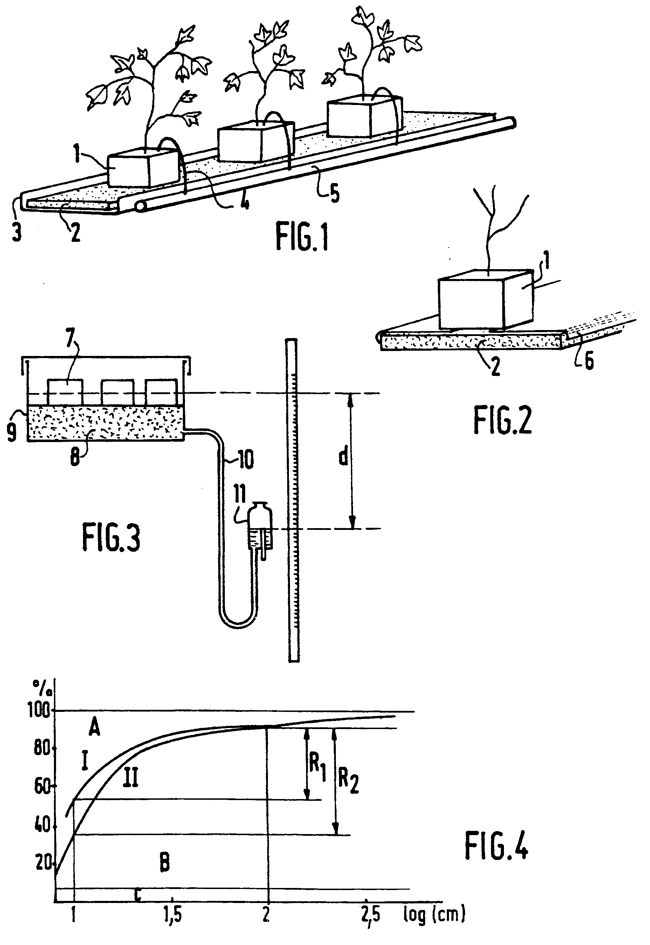

Cette disposition est habituellement complétée par la présence d'une feuille imperméable recouvrant le substrat à l'exception des emplacements où les mottes sont posées, et qui a pour fonction de réduire l'évaporation de la solution nutritive retenue dans le substrat par contact avec l'atmosphère environnante. Cette feuille n'est pas représentée à la figure 1.

La solution nutritive dans le mode représenté est distribuée par percolation au moyen de tubes capillaires 4 directement sur les mottes 1. Les tubes capillaires sont alimentés par une conduite 5 de distribution.

Le conteneur 3 peut être disposé à même le sol, ou suivant un mode traditionnel, sur une plaque isolante par exemple en polystyrène.

L'ensemble peut comprendre aussi des moyens de réchauffage situés notamment directement sous les conteneurs.

La solution nutritive peut être distribuée de façon continue notamment lorsqu'un recyclage est organisé. Dans ce cas, le sol est aménagé de sorte que la solution excédentaire qui exsude du substrat puisse s'écouler et être récupérée sur le côté ou à une extrémité du conteneur pour être renvoyée aux moyens assurant l'alimentation. Elle peut aussi être distribuée de façon discontinue soit à intervalles et en quantités prédéterminés dont on sait qu'ils garantissent une humidité appropriée du substrat, soit en fonction d'une mesure permanente du taux d'humidité qui permet de déclencher l'alimentation lorsque cette humidité devient inférieure à un certain seuil.

La figure 2 présente un mode de réalisation d'un substrat selon l'invention dans lequel le feutre de fibres minérales constituant le substrat est recouvert par une feuille souple imperméable 6 contre l'évaporation. Les substrats selon l'invention peuvent être produits la face supérieure du substrat recouverte seule par cette feuille. Celle-ci peut aussi envelopper complètement le feutre.

La figure 3 montre le dispositif utilisé pour déterminer la rétention d'eau des substrats pour différents pF.

Pour cette détermination, ces échantillons 7 de matériau constituant les substrats ont tous 7,5 cm de haut et sont découpés en carrés de 10 cm de côté.

Ces échantillons sont immergés complètement pendant 1 heure puis placés sur un matériau poreux 8 tapissant le fond d'un bac 9. Le matériau poreux, un lit de sable par exemple, est initialement saturé d'eau.

Le fond du bac 9 communique par une conduite souple 10 avec un vase 11 dont le niveau est fixe (par un système de trop plein). La position du vase 11 sur un support vertical peut être réglée à volonté.

La mesure de la depression d est faite systématiquement en se référant à la mi-hauteur de l'échantillon. On impose successivement les diverses dénivellations correspondant aux pF étudiés. Les mesures sont effectuées après que les échantillons ont été maintenus jusqu'à obtention de l'équilibre dans chaque nouvelle condition de dénivellation.

A l'équilibre, l'échantillon est retiré, pesé, séché et pesé de nouveau après séchage. La différence donne la masse d'eau retenue et par suite la proportion d'eau et d'air pour chaque condition de succion imposée.

Les courbes de rétention en fonction du pF pour différents matériaux permettent de comparer leur aptitude à assurer une bonne irrigation des cultures.

Ces courbes, pour les matériaux fibreux minéraux, ont l'aspect représenté à la figure 4. Sur ces courbes en abscisse sont portés les logarithmes des succions en centimètre de colonne d'eau et en ordonnée les pourcentages de volume de substrat occupé par l'eau, l'air et la fibre. Cette dernière, de façon constante dans l'exemple représenté, occupe environ 5 % du total. Ces pourcentages définissent sur la figure les domaines respectivement désignés par A, B et C.

La différence des pourcentages entre pF1 et pF2 pour la part occupée par l'eau détermine la quantité d'eau disponible.

Pour les substrats fibreux minéraux, le pF2 est tourjours très faible, les différences principales constatées entre les divers matériaux pour l'eau disponible viennent donc du pF1. Les courbes I et II illustrent ce type de différences. Elles correspondent respectivement à un substrat traditionnel à base de laine de roche et à un substrat selon l'invention à fibres très fines, pour une même masse volumique. La réserve utile R₂ est sensiblement supérieure dans le second cas.

Les conditions dans lesquelles les mesures sont faites (épaisseur 7,5 cm d'échantillon) correspondent aux substrats traditionnels. Si ces conditions permettent de comparer les produits entre eux, elles ne mettent pas en évidence les avantages propres aux substrats peu épais proposés selon l'invention.

L'étude de la répartition dans la hauteur de l'échantillon montre en effet une très forte inhomogénéité. La partie supérieure ren ferme très peu d'eau et beaucoup d'air, et l'inverse pour la partie inférieure.

Des mesures systématiques ont donc été faites sur différents produits selon l'invention et d'autres qui ne répondent pas aux caractéristiques retenues, à titre de comparaison. Ces mesures recouvrent des produits de masse volumique, de finesse de fibres et d'épaisseur différentes, mais constitués du même verre et avec la même quantité d'agent mouillant de l'ordre de 300 g/m³ de feutre.

Les mesures de la rétention à pF1 effectuées pour différents diamètres de fibres, deux séries de masse volumique et deux épaisseurs sont les suivantes.

| épaisseur (en mm) | kg/m³ | micromètre | | |
|---|---|---|---|---|
| | | 8 | 6 | 4,5 |
| 80 - 85 | 80 | 61 | 86 | 95 |
| 80 - 85 | 40 | 46 | 57 | 81,5 |
| 20 | 40 | 25 | 54 | 86 |

Ces résultats montrent dans tous les cas un accroissement de la rétention pour une diminution du diamètre moyen des fibres. Cet accroissement est d'autant plus sensible que la masse volumique et l'épaisseur sont petites.

En choisissant de faibles épaisseurs et une faible masse volumique, une rétention très importante peut être obtenue lorsque les fibres sont suffisamment fines.

Les mesures faites sur un même feutre et pour différentes épaisseurs font apparaitre une grande stabilité de la rétention pour les feutres constitués de fibres très fines.

Aux différentes épaisseurs étudiées, le feutre constitué de fibres de diamètre moyen 4,5 micromètres et de 40 kg/m³ présente les rétentions suivantes :

| | | | | |
|---|---|---|---|---|
| - épaisseur (mm) | 20 | 35-40 | 55-60 | 80-85 |
| - rétention à pF1 | 86 | 85 | 87 | 81,5 |

Compte tenu des imprécisions inhérentes à ce type de mesure, les écarts relevés ne sont pas significatifs.

Il semble, d'après les mesures effectuées, que dans le cas des feutres à forte masse volumique et surtout constitué de fibres de diamètre moyen plus important, l'épaisseur influe sur la rétention, celle-ci étant sensiblement plus faible lorsque l'épaisseur diminue.

Par ailleurs, il faut encore souligner que seuls le feutres à fibres fines sont susceptibles d'une utilisation sans agent mouillant.

Compte tenu de ces résultats, il apparait donc tout à fait avantageux d'utiliser des substrats moins épais à fibres fines.

Les exemples suivants de cultures ont été menés avec des substrats selon l'invention.

Deux types de substrats ont été utilisés : le premier est constitué de panneaux de laine minérale préparés à partir de laitier de haut fourneau, le second à partir de panneaux de laine de verre.

La composition respective des fibres de ces substrats est la suivante :

| fibres de laitier de fonderie | | fibres de verre | |
|---|---|---|---|
| SiO₂ | 42,8 % | SiO₂ | 66,9 % |
| Al₂O₃ | 11,9 % | Al₂O₃ | 3,35 % |
| CaO | 38,7 % | Na₂O | 14,7 % |
| MgO | 3,6 % | K₂O | 1 % |
| Fe₂O₃ | 1,2 % | CaO | 7,95 % |
| MnO, B₂O₃ ) | 0,4 % | MgO | 0,30 % |
| TiO₂, P₂O₅ ) | | MnO | 0,035 % |
| SO₃ | 0,3 % | Fe₂O₃ | 0,49 % |
| Divers | 1,1 % | SO₃ | 0,26 % |
| | | B₂O₃ | 4,9 % |

Les panneaux de substrats produits sont liés avec une résine formophénolique à raison d'environ 2,5 % en poids de l'ensemble. Dans le cas des laines de roche, le substrat contient en outre environ 1 % d'agent tensio-actif.

Les panneaux sont découpés aux dimensions de 1000 × 200 et présentent une épaisseur de 50 mm pour la laine de roche et 25 mm pour la fibre de verre. Le diamètre moyen des fibres et des 5 micromètres pour la laine de roche (non comptées les particules infibrées) et de 4 micromètres pour la laine de verre.

La masse volumique respective du substrat laine de roche est de 40 kg/m³, celle du substrat fibre de verre n'est que de 25 kg/m³, correspondant respectivement à des porosités de 95 et 98 %.

La rétention d'eau à pF1 de ces substrats est dans les deux cas sensiblement égale à 70 %. Dans les deux cas, par conséquent, un bon équilibre air/eau s'établit qui est favorable à la croissance.

La culture des tomates de variété Montfavet est conduite en serre suivant les modalités indiquées ci-après.

Les semis sont repiqués sur des blocs de laine de roche de 75 × 75 × 60 mm de même nature que le substrat indiqué ci-dessus. La mise en place sur le substrat est effectuée au stade de l'apparition du premier bouquet.

A titre de comparaison, une culture est conduite sur un substrat de laine de roche traditionnel d'épaisseur 75 mm et de masse volumique 70 kg/m³ dont les fibres ont un diamètre moyen de 6 micromètres.

Pour les trois types de substrat, la conduite de la culture est la même. Les plants sont distants les uns des autres de 30 cm dans le sens de la longueur du substrat, ce qui correspond à une implantation de 2,5 plants per mètre carré de serre. L'installation d'alimentation est du type décrit plus haut en rapport avec la figure 1.

L'irrigation est faite avec une solution de type Coïc-Lesaint comportant 12,2 milliéquivalents par litre d'azote nitrique, 2,2 milliéquivalents par litre d'azote ammoniacal et 2,2 milliéquivalents par litre de phosphate. Le pH est réglé environ à 6.

L'alimentation des plantes est effectuée de façon discontinue en fonction de la mesure de la conductivité dans la solution contenue dans le substrat. L'alimentation maintient une conductivité supérieure au seuil correspondant à une teneur qui n'est pas inférieure à 12 milliéquivalents par litre en azote.

De la mise en place jusqu'à la fin de la récolte s'écoulent environ 24 semaines.

Le rendement dans tous les cas s'est établi à environ 6,5 kg par pied. En particulier on ne discerne pas de différence marquée entre les cultures conduites sur substrat de laine de roche mince ou épais. De la même façon, aucune différence sensible n'apparait quant au rendement entre les cultures sur substrats mince de laine de roche et de laine de verre.

On constate une meilleure tenue structurelle des substrats laine de verre en dépit de leur masse volumique relativement plus faible. Cette constatation est à attribuer vraisemblablement à la présence de fibres plus longues qui renforcent la cohésion du feutre.

## Revendications

1. Substrat de culture hors-sol formé d'un feutre de fibres minérales, liées par un liant organique, caractérisé en ce que le feutre comprend des fibres ayant un diamètre moyen compris entre 2 et 8 µm et a une masse volumique au moins supérieure à 15 kg/m³ et au plus égale à 40 kg/m^{3.}

2. Substrat selon la revendication 1, caractérisé en ce que le diamètre moyen des fibres est compris entre 2 et 6 micromètres.

3. Substrat selon l'une des revendications précédentes, caractérisé en ce que son épaisseur est comprise entre 10 et 40 mm.

4. Substrat selon l'une des revendications précédentes, caractérisé en ce qu'il est constitué d'un feutre de fibres de verre.

5. Substrat selon l'une des revendications précédentes, caractérisé en ce qu'il présente une proportion d'eau disponible qui n'est pas inférieure à 40 %

6. Substrat selon la revendication 5, caractérisé en ce que sa réserve en eau disponible n'est pas inférieure à 50 %.

## Claims

1. A substrate for soil-less cultivation and consisting of a mineral fibre felt bonded by an organic binder, characterised in that the felt contains fibres having a mean diameter of between 2 and 8 microns and a volumetric mass at least greater than 15 and at most 40 kg/cu.m.

2. A substrate according to Claim 1, characterised in that the mean diameter of the fibres is between 2 and 6 microns.

3. A substrate according to one of the preceding Claims, characterised in that its thickness is between 10 and 40 mm.

4. A substrate according to one of the preceding Claims, characterised in that it consists of a glass fibre felt.

5. A substrate according to any one of the preceding Claims, characterised in that it contains a proportion of available water which is not less than 40 %.

6. A substrate according to Claim 5, characterised in that its reserve of available water is not less than 50 %.

## Patentansprüche

1. Substrat für erdelose Kultur, aus einem mit einem organischen Bindemittel gebundenen Mineralfaserfilz, dadurch gekennzeichnet, daß der Filz Fasern enthält, die einen mittleren Durchmesser zwischen 2 und 8 µm aufweisen und eine Rohdichte von mehr als 15 und von hoechstens 40 kg/m³.

2. Substrat nach Anspruch 2, dadurch gekennzeichnet, daß der mittlere Faserdurchmesser zwischen 2 und 6 Mikrometern liegt.

3. Substrat nach einem der vorhergehenden Ansprueche, dadurch gekennzeichnet, daß seine Dicke zwischen 10 und 40 mm liegt.

4. Substrat nach einem der vorhergehenden Ansprueche, dadurch gekennzeichnet, daß es aus einem Glasfaserfilz besteht.

5. Substrat nach einem der vorhergehenden Ansprueche, dadurch gekennzeichnet, daß es einen Anteil an verfügbarem Wasser aufweist, der nicht unter 40 % liegt.

6. Substrat nach Anspruch 6, dadurch gekennzeichnet, daß sein Vorrat an verfügbarem Wasser nicht unter 50 % liegt.
